# EUROPEAN PATENT SPECIFICATION

(11) **EP 1 787 016 B1**
(45) Date of publication and mention of the grant of the patent: **17.12.2008**
(21) Application number: 05759590.2
(22) Date of filing: 11.07.2005
(51) Int. Cl.: F01N 3/04, B01D 47/06, F23J 15/00

(54) **MIST INJECTOR FOR GAS TREATMENT**
NEBELINJEKTOR ZUR GASBEHANDLUNG
INJECTEUR DE BROUILLARD POUR LE TRAITEMENT DES GAZ

(30) Priority: 16.07.2004 GB 0416012
(43) Date of publication of application: 23.05.2007
(73) Proprietor: DAVIS, Howard Paul, Petersham Richmond, Surrey TW10 7AA (GB); Missions, David William, Ashford Kent TN26 1HT (GB)
(72) Inventor: DAVIS, Howard Paul, Petersham Richmond, Surrey TW10 7AA (GB); Missions, David William, Ashford Kent TN26 1HT (GB)
(74) Representative: Lawrence, John
(86) International application number: PCT/GB2005/002719
(87) International publication number: WO 2006/008457

(56) References cited:
- EP-A- 1 142 621
- US-A1- 2004 043 475
- PATENT ABSTRACTS OF JAPAN vol. 006, no. 174 (C-123), 8 September 1982 (1982-09-08) & JP 57 091718 A (KYOWA KAKO KK), 8 June 1982 (1982-06-08)
- PATENT ABSTRACTS OF JAPAN vol. 2000, no. 16, 8 May 2001 (2001-05-08) & JP 2001 025626 A (BABCOCK HITACHI KK), 30 January 2001 (2001-01-30)
- PATENT ABSTRACTS OF JAPAN vol. 012, no. 132 (C-490), 22 April 1988 (1988-04-22) & JP 62 250926 A (SEIKO KAKOKI KK), 31 October 1987 (1987-10-31)

## Description

This invention relates to a device and a method for producing a fine liquid mist and injecting the said mist into a gas stream. It is especially concerned with employing the said mist to entrap fine particulate material and other pollutants entrained in the gas stream.

Emissions of fine particulate, CO₂ and hydrocarbon gases are more and more damaging to the environment and cause health problems, especially in big cities around the world. Typical health problems are asthma and a whole host of respiratory illnesses which are increasing at alarming rates in both developing and developed countries. The solid particles which for health reasons it is most important to remove are extremely fine particles, usually in the 0.02 - 0.3 micron (*µ*m) size range.

There have been attempts to combat this ever-increasing problem especially in the vehicular engine domain. Early vehicular pollution devices such as catalytic regenerative traps ("CRTs") & non-catalytic particulate traps have been frequently employed especially on trucks and heavy goods vehicles. Some governments offer financial inducements to fit such control technologies.

However these devices function with increasing back pressure on the engine as total particulate load in the trap builds over time. Also the regenerative (catalytic) devices require high temperatures to ensure good consistent particulate conversion to CO₂ and H₂O which is difficult to achieve while the vehicle is idling in traffic jams and through congested city centres. They also need cleaning (even regenerative devices need periodic particulate removal) and finally replacing on a fairly frequent basis (often 2-3 years) especially if employed on high mileage vehicles. This can be both expensive & time consuming.

Japanese patent application no. JP57091718 discloses a method for removing mist from an exhaust gas by spraying water into the gas on the upstream side of a demister to humidify the gas.

According to the invention there is provided apparatus for injecting liquid into a pressurized gas stream containing suspended solids in the form of fine particles which apparatus comprises a droplet generator including a gas-conveying pressure duct and one or more liquid-introducing tubes which lead into the said duct and terminate in one or more spray nozzles, wherein the duct includes an atomising chamber in which the sprayed liquid is broken into a mist of very fine liquid droplets which collide with and capture the fine particulate solids and in that a droplet separator is provided downstream of the atomising chamber to separate the stream into a liquid/particulate mixture and a gas stream with a reduced concentration of particulates.

The invention also provides a process for injecting liquid into a pressurized gas stream containing suspended solids in the form of fine particles in which the liquid is sprayed into and mixed with the gas stream in a manner to be atomised into a mist of very fine liquid droplets which collide with and capture the fine particulate solids and in which the so-formed liquid/particulate mixture is then separated out to leave a gas stream with a reduced concentration of particulates.

The invention is very well suited to efficiently capturing very fine particulate emissions, such as generated in internal combustion engines and many manufacturing processes. It is described hereinafter mainly with reference to its application in directly cleaning up vehicle exhaust gases, in which application it is known as an "Exhaust Vent Air Cleaner" (EXVAC™), since it can fit on to the exhaust or tail pipes of cars, vans, trucks, buses and coaches etc. It can however also be beneficially applied in achieving substantial reductions of such atmospheric pollutants in the interior space occupied by the driver, crew and passengers in vehicles such as cars, vans, trucks, buses and coaches and in ships and aircraft. Similarly it can be beneficially applied to clean up of the atmosphere in habitable spaces in buildings such as homes, offices, shops and factories.

Light duty commercial diesel vehicle (N2 Class) exhaust gas flow rates, for example, typically vary between 50 m³/hr and 500 m³/hr depending on engine capacity and load. During low speed driving around town the exhaust gas flow rates tend to be relatively low as do particulate (PM) and CO₂ emissions. However during periods of high engine load, such as accelerating, travelling up hill and at high speeds such as on motorways or major roads the gas flow rates increase substantially as do particulate (PM) and CO₂ emissions. The emission abatement performance of the invention mirrors these characteristics in that as the gas flow rate increases through the device so does its ability to remove particulates (PM) and CO₂. Combined cycle particulates (PM) and CO₂ emissions, for a typical light duty commercial diesel vehicle, are respectively 0.15 g/km and 200 g/km. Currently there are no CO₂ emission limits but as a result of the Kyoto Protocol countries worldwide are under increasing pressure to reduce CO₂ and other emissions. However there currently do exist emission limits for PM. For instance for this category of N2 Class vehicles the European limits are, for Euro 2 (01/01/1998) 0.15 g/km, for Euro 3 (01/01/2002) 0.07 g/km, and for Euro 4 (01/01/2006) 0.04 g/km. Use of the invention on older vehicles enables operators to adapt their vehicles to meet changing legislation.

According to the invention the liquid sprayed into the atomising chamber is sheared into a mist of a massive number of very fine diameter droplets that then collide with and capture the particulates. The particulates are captured on the fine droplets' surfaces and the particulates and droplets are immediately removed from the gas stream in the droplet separator. By using this simple but highly effective component droplet capture rates are normally found to be in the range 95-99%.

Key factors in ensuring high levels of capture of the particulates are the shape and numbers of spray nozzles and the shearing effect of the gas stream on the spray.

The shape and numbers of the spray nozzles should be such as to provide a wide spread of liquid from which the mist is formed as a front of very fine droplets over substantially the full cross-sectional area of the atomising chamber.

To form the mist the liquid spray emerging from the nozzle(s) is sheared into the very fine droplets by the gas and liquid conditions in the atomising chamber. These include the gas pressure and velocity and the liquid to gas ratios. The mist droplets preferably have a diameter in the range 10 to 100 µm, most preferably 10 to 50 µm. By so controlling the droplet sizes and distribution it is possible to wet and thereby capture the extremely fine particulates. The fine mist front presents a minimal free area in which particulates can evade capture. The capture is assisted by the large numbers of droplets, typically in the range 1 x 10¹¹ to 1 x 10¹³ droplet per m² per sec across the area of the droplet front

The gas stream at the point of liquid injection should be at elevated pressure, preferably in the range 0.2 to 15 kPa. Gas streams from vehicle exhaust systems generally provide such pressures without the need for further compression. It is also desirable to minimize the gas pressure drop through the system, preferably to be in the range 0.3 to 4 kPa. An important advantage of the invention is that a low pressure drop can be maintained without deterioration over time, thus relieving strain on the vehicle engine due to excessive or increasing back pressure.

The liquid spray is preferably directed co-currently into the gas stream. This has the useful benefit of keeping the spray nozzle unplugged. The liquid passing through the spray nozzle has a cooling effect, which in handling hot gas streams such as a vehicle exhaust gases allows the nozzle to last for years with little or no maintenance.

It is important to maintain liquid to gas ratios in the range 0.01- 0.15 litres/m³ (water to gas volume ratio) to ensure that both the optimum large number of very fine droplets is generated and simultaneously to maintain a low system pressure loss.

There are many options for the shape of the atomising chamber at the liquid injection point. It can be a pipe or plenum chamber and can be for example circular, ellipsoidal, square, rectangular or any other cross section and can be straight, curved, rounded, bent or tapered or in a full or partial vena contracta (reducing and then opening). Its shape and any internal constrictions will however be such that gas passing though it is reduced in pressure at the point of liquid injection, for example by including orifice(s) plate(s) or other pressure loss generating constriction, such that the liquid atomization is enhanced under reduced pressure.

In a preferred embodiment of the invention the reduced pressure is achieved by passing the gas stream through a venturi. The increased velocity and reduction in pressure of the gas stream as it passes through the venturi are highly effective in creating the required conditions for producing the fine droplet mist.

The droplet separator is required to remove from the gas stream fine liquid droplets and their captured particulates. This can be achieved by exploiting different characteristics of the gas stream and the droplets such as the greater momentum of the droplets and the ability to reduce the gas velocities relative to the droplet velocities in the separator. It comprises a separating chamber, a sump to collect the liquid/solid mixture and an outlet duct for the cleaned gas stream.

The droplet separator includes an inlet duct for the gas stream and liquid/particulate droplets, a sump to collect the separated liquid/particulate droplets and an outlet duct for the gas stream. It should be configured so as to present minimal obstruction to gas flow.

In general the inlet duct forms the body of the droplet separator. It can for example be circular, rectangular or any other cross section and it can be straight, curved or rounded. The shape of ducts in both the droplet generator and the droplet separator should however be such as to avoid fouling or plugging by deposited particulates since these can otherwise gradually lead to undesirable pressure build-up.

In one embodiment of the invention the inlet duct is of larger cross-sectional area than the atomising chamber such that on entering the separator the through gas velocity drops to a level insufficient to keep the droplets in suspension.

In a preferred embodiment of the invention guide vanes are fitted to the inside walls of the separator to induce axial swirling motion to the gas/droplet mix. The effect of this is to cause the water droplets, which are far denser than the gas and therefore have far greater momentum, to migrate to the inside walls of the separator. This enhances separation of the water droplets from their carrying gas.

In a preferred embodiment of the invention the opening of the outlet duct faces in the same direction as gas flow from the atomising chamber such that gas exiting from the separator flows in the opposite direction from gas leaving the atomising chamber. In this embodiment the separation utilizes the lower momentum of the gas to reverse its direction to exit through the outlet, while the greater momentum of the particulate droplets carries them past the gas outlet and into the liquid sump. The respective shapes and locations of the separator ducts can if desired be such as to generate a swirling or vortex action in the inlet gas stream which can be helpful in enhancing separation of gas from the droplets.

The outlet duct should preferably have a cross-sectional area no smaller than that of the atomising chamber. This avoids build up of backpressure of gas in the separator.

The droplet separator is preferably integral with the pressure duct. This is convenient in forming a single unit for installation in confined space, for example as in a motor vehicle exhaust system.

The combined pressure loss through the fine droplet generator and fine droplet separator sections can be controlled by a combination of liquid to gas ratio and the gas velocity at the point of liquid injection, which is determined by the atomising chamber cross sectional area and, in the case of a vehicle exhaust, on engine exhaust volumes or driving speeds.

Droplet separators according to the invention can remove more than 92% of the droplets from the gas stream. Particulate is typically removed to levels between 80 and 98% depending on such aspects as vehicle operation and driving speeds and on the atomising chamber design configuration.

In many applications, and especially in vehicle exhaust attachments, it is desirable to reduce losses of injected liquid and/or to recirculate it. Liquid evaporation and mist losses are reduced by such factors as low liquid to gas ratios, low residence time of droplets and low temperatures.

Liquid recirculation can be achieved by one or more pumps drawing liquid from the fine droplet separator around a purpose built tank system. In a vehicle system the power to drive the pump(s) can be taken from the vehicle's electrical circuit.

The liquid recirculation system preferably includes one or more filters, preferably of readily replaceable modules, to remove the particulates from the liquid before it is reused. In bulk the collected particulates are a usually sooty mass which would otherwise tend to build up and block the system.

The sprayed liquid is preferably water or aqueous solution and can be tap water, rainwater, river water, seawater or some domestic or industrial waste waters. If the water is not naturally soft it should preferably be softened prior to injection, if necessary by such a measure as including a water softener in the recirculation system. This avoids the risk of limescale building up and blocking such components as the spray nozzle.

In certain cases it is preferable for the sprayed liquid to include a mild, non-toxic chemical buffer, soaps or detergents, and/or catalysts or enzymes, for the purpose of accelerating absorption of gases such as CO₂, NOₓ, SO₂ or organic vapours such as formaldehyde. Such solutions would be in the pH range 5 to 14, with a preferred range of 7 to 11. Suitable buffers include carbonates and/or bicarbonates. Suitable enzymes include carbonic anhydrase.

The evaporative cooling effect of the very fine droplets maintains a reduced temperature in the recirculated liquid. In the case of vehicle systems and water injection, the evaporative cooling effect prevents the temperature of recirculating water exceeding 45°C. This is beneficial in vehicle systems in that the volumes of top-up water required to achieve the particulate removal are similar to and typically less than the engine fuel consumption rates such that the tank size can be similar in size to the fuel tank (typically 50 to 100 litres). Thus refilling the water tank can conveniently take place at the same time as refuelling.

In one embodiment of the invention the liquid supply is provided or boosted by a rainwater collection device and storage tank for the so-collected water. This reduces the frequency of water top-up, which is especially helpful in vehicle systems.

A great benefit of the particulate removal in a combined droplet generator/droplet separator according to the invention is that it is self-regulatory. High levels of fine particulate capture are maintained by high liquid to gas ratios at low exhaust gas volumes and higher pressure losses at high engine or process exhaust volumes. In use on a vehicle the high liquid to gas ratios during low gas periods at slow speeds help to maximise particulate removal in cities and towns where particulate emissions are found in higher concentrations. When the engine works harder during high speed high exhaust periods the droplet generator has a built in improvement since the pressure drop through the atomising chamber increases thereby overcoming the effect of reducing the liquid to gas ratio.

A further benefit when using a device according to the invention in a motor vehicle is that it does not significantly affect the operation of the vehicle engine. If the device fails for any reason, for example by running out of liquid to be injected, the engine continues to operate, albeit with the release of pollutant particulates that would otherwise have been removed.

In a further preferred embodiment of the invention a degassing unit for absorbing residual gases and vapours, for example CO₂, soluble hydrocarbons and water vapour, is located downstream of the droplet separator. The unit is preferably a polymer or membrane absorber contactor (MAC or EXMAC™). Again for ease of installation in locations such a vehicle exhaust systems it may be integral with the droplet generator and droplet separator, or it can be conveniently fitted as a cartridge in a modular easily removable and easily cleanable canister.

The membrane within the MAC canister can be arranged in one of, but not limited to, the following configurations; cross flow, spiral, tubular, or plate. The liquid side passages will be connected at the inlet and outlet to the pump driven recirculation system and the vent gas flow arranged in either counter current, co-current, or cross flow mode.

The MAC unit utilizes liquid recirculation on the downstream surface of the membrane (with respect to the gas flow). If fitted in a modular canister it can easily be cleaned by periodical washing. The recirculating liquid may include added chemical or biological reagents such as - but not limited to - sodium hydroxide (NaOH), methanolamine (MEA) or diethanolamine (DEA) or other alkalis, amines, buffers, soaps or detergents, catalysts or enzymes (for example carbonic anhydrase) to accelerate reaction with and elimination of gases and organic vapours, especially gaseous CO₂, which may permeate through its plastic membrane. The liquid phase reactions are relatively rapid within the chemical solutions, which are recirculated through the hermetic polymer pores via a simply built tank that can be attached to a vehicle underside or interior. This fast reaction rate assists in maximising the removal of CO₂, NOₓ, SO₂ and organic vapours by enhanced mass transfer through the selected membrane. Either high or low strength reagents can be used but it is preferable to operate with solutions above a 1M strength, most preferably above a 2M strength unless the solution contains an accelerating catalyst or enzyme.

The MAC unit will typically operate with liquid to gas ratios in the range of 0.5 to 12 litres/m³ (liquid to gas volume ratio). With a preferred range between 2 to 10 litres/m³ (liquid to gas volume ratio), which ensure optimum mass transfer whilst keeping the pumping capacity reasonable.

The MAC unit requires surprisingly little pressure loss to work efficiently. A feed pressure of 3 kPa is usually sufficient. Its operation is greatly enhanced by the prior removal of particulate solids in the droplet generator/droplet separator, which avoids it being fouled excessively or clogging up too rapidly.

For use on a vehicle the MAC unit should include a water storage tank, which should conveniently be similar in size to the fuel tank and the liquid storage tank for the droplet generator (typically 50 to 100 litres). The MAC tank can be evacuated & refilled once every 2 to 4 weeks assuming a weekly driving period of 30 hours as typical for a delivery van. The unit should preferably also include a water recirculation system with appropriate pumping means.

The degassing unit also benefits from a self-regulating principle in that high liquid to gas ratios and longer gas residence times occur with low flow rates, thereby aiding CO₂ absorption performance, whilst as the gas flow increases the turbulent effect greatly offsets the reduced liquid to gas ratio to maintain optimum adsorption efficiencies as high as 45% (depending on attachment size & geometry).

Upstream cooling in the droplet generator/droplet separator is of essential importance to protecting the MAC cartridge to avoid polymer membrane damage and to aid the absorption into the chemical solutions. This cooling also assists the removal of the soluble hydrocarbon gases generated in cars, vans, wagons, trucks, train engines and boats etc. The higher the gas temperature the slower the rates of gas diffusion & absorption through the membrane barrier. The exhaust gas is typically cooled by temperatures between 100°C and 220°C from the engine exhaust pipe temperatures of up to 300°C (i.e. between 80 °C and 200°C).

An enormous benefit of the MAC unit is that the recirculating water and chemicals in solution are sealed from the counter or co-current gas (pre-cooled in the droplet generator/droplet separator) by the polymer membrane, which however allows CO₂ and some hydrocarbon molecules such as formaldehyde to pass through and absorb into the liquid. Salts produced such as Na₂CO₃ do not precipitate within the membranes due to selection of the correct solution concentrations over the operating life recycle typically being around 3 months.

The MAC unit is capable of offering maximum interfacial gas/permeate surface (at least 100 m²/m³ and preferably in excess of 200 m²/m³) while reducing the risk of blockage during passage of small amounts of residual particulate being around 2 to 10% of an engine particulate emissions depending on the selected configuration of the atomising chamber. The MAC degassing canister will typically, but not necessarily, be cylindrical in shape and have a diameter between 1 to 7 times that of the gas source vent pipe or equivalent cross sectional area if not circular in cross section. Further the length of the MAC canister will preferably be 3 to 15 times the equivalent diameter of the gas source vent pipe.

The liquid circulation pipes are connected, for example by bounding, to the membrane to allow convenient installation of the specific configured membrane (e.g. spiral, tube, plate, fibre, mesh or other) within the canister. This helps present the maximum surface area between the gas and membrane whilst ensuring minimum gas side pressure loss.

In a vehicle exhaust system the pressure drops in both the droplet generator/droplet separator and the degassing unit are each maintained at below about 1-4 kPa at normal vehicle speeds. Since the limit to ensure there is no undue backpressure effect on a diesel engine is about 12-15 kPa the droplet generator/droplet separator and the degassing unit according to the invention can be a virtual fit and forget device.

The invention provides a pollution-control device that can efficiently clean a gas stream by removing particulates, carbon dioxide and hydrocarbons without the need for expensive catalysts using exotic metals. It is readily constructed as a simple modular system, which is low-maintenance, has a long-life and which works consistently at all times. In vehicle applications it provides for substantial reduction of fine carbonaceous metallic particulates and carbon dioxide emissions along with some of the emitted hydrocarbon vapours.

The invention is further described with reference to the accompanying figures, in which:
Figure 1: Shows the invention, as applied to vehicle exhaust pollution abatement, in schematic form and complete with optional degassing stage.
Figure 2: Shows the main application for the removal of fine particulates from diesel engine exhausts, as a stand-alone device, in schematic form.
Figure 3: Gives details of one embodiment of the droplet generator.
Figure 4: Gives details of one embodiment of the droplet separator.
Figures 5, 6 and 7: Show one embodiment of the membrane absorber contactor (MAC) where the membranes are mounted in a shell-and-tube arrangement. Figure 5 shows the general arrangement. Figure 6 shows details of the gas/liquid separation and molecular gas transfer. Figure 7 shows the cross-section of a single membrane tube.
Figure 8, 9 and 10: Show a further embodiment of the membrane absorber contactor (MAC) where the membranes are mounted in spiral configuration whereby the liquid is flowing within the spiral and the gas is flowing over the spiral surface. Figure 8 shows the general arrangement. Figure 9 is cross-section through the canister showing the arrangement of the spiral membrane. Figure 10 is a detail of a section of spiral membrane showing the gas/liquid separation and molecular gas transfer.

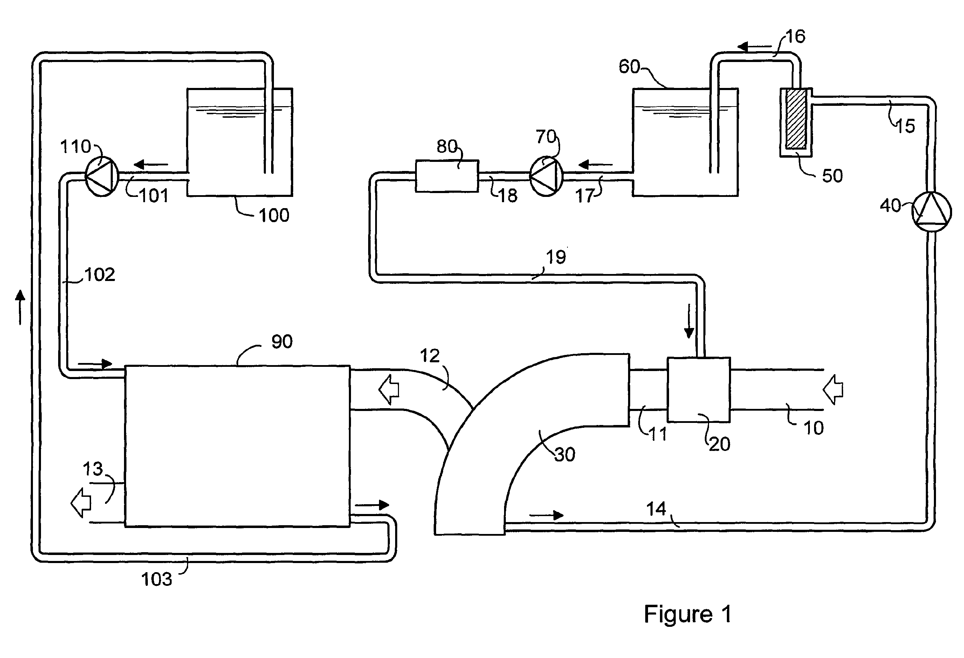

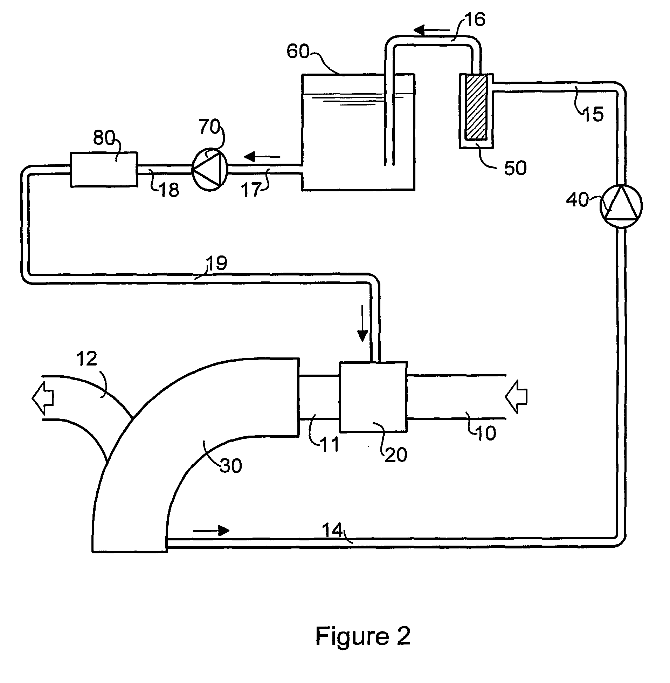

The apparatus shown in Figures 1 and 2 comprises a pressure tube 10 leading from a vehicle exhaust pipe (not shown). At its downstream end the tube 10 leads into the droplet generator 20 and then, through transfer tube 11 to the droplet separator 30. Treated vehicle exhaust gases are discharged through tube 12. With the optional degassing stage, as shown in Figure 1, the treated vehicle exhaust gases are conveyed through tube 12 to the MAC and then discharged through tube 13. Collectively the tube 10, droplet generator 20, tube 11, droplet separator 30, tube 12, and optionally MAC 90 and tube 13 provide a pressure duct for the vehicle exhaust gases.

Figures 1 and 2 show a open loop water recirculation circuit, which comprises water storage tank 60, water take-off pipe 17, water feed pump 70, water feed pipes 18 & 19 (to droplet generator 20), magnetic water softener 80 (optional), water return pipes 14, 15 & 16, water return pump 40, and water filter 50. The water circuit is open loop because the water is directly sprayed into the vehicle exhaust gas before downstream separation from the gas, collection and recirculation for use again. The fine water droplets generated in the droplet generator 20 capture particulates from the vehicle exhaust gas. These water droplets, now containing captured particulate matter, are then separated from the vehicle exhaust gas stream in the droplet separator 30, with the separated water droplets collected and removed, from the droplet separator 30, through pipe 14. The particulate laden water in pipe 14 is pumped (pump 40) to the modular cartridge filter 50 where the particulate matter is removed from the water stream and deposited onto a filter element. The filtered water is then transferred through pipe 16 back to the water storage tank 60 for re-use. This easily replaceable filter maintains the system clean and only requires disposal at a municipal dump approximately every 3 to 6 months. The water storage tank 60 is equipped with suitable connections for ease of filling, draining and cleaning.

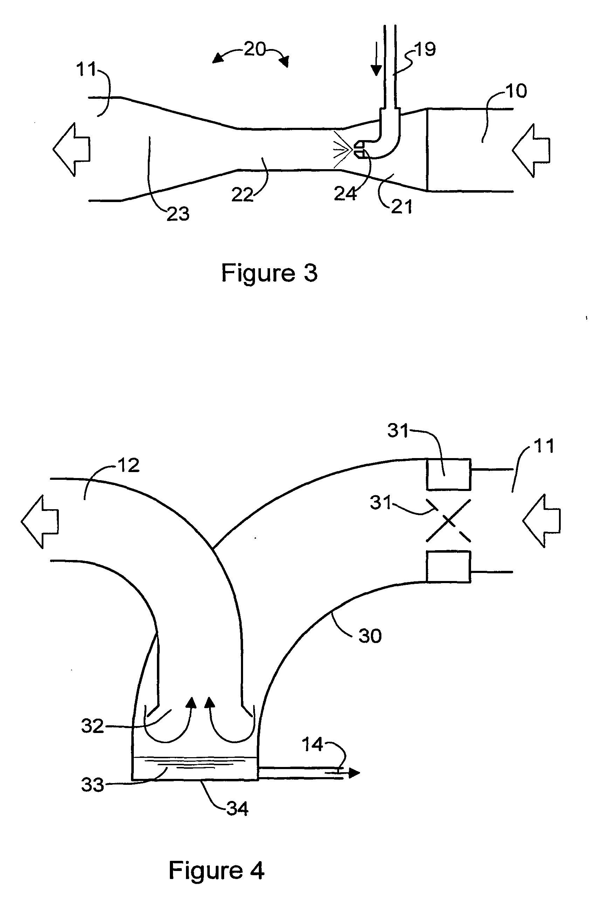

Figure 3 shows one embodiment of the droplet generator 20. Exhaust gases from the vehicle exhaust pipe (not shown) enters the device through tube 10, which at its downstream end leads into a converging conical section 21 and then into a narrow throat section 22 and a diverging cone 23 leading to transfer tube 11, all disposed horizontally on the same axis.

Collectively the tube 10, cone 21, throat 22, cone 23, and tube 11 provide a pressure duct for the vehicle exhaust gases. A water supply pipe 19 leads through the wall of cone 21 to a spray nozzle 24 whose outlet is directed along the common axis in a downstream direction.

Figure 4 shows one embodiment of the droplet separator 30. The exhaust gases leaving the droplet generator will now contain a vast number of fine water droplets in which particulate matter is captured. This gas and water droplet mix is directed into the separator 30 through tube 11. As the gases enter they are encouraged to spin by vanes 31 attached to the inside wall of the separator. This spinning action causes the water droplets, which although are traveling at only slightly less velocity than the gases have far greater momentum, to migrate to the inside walls of the separator. The separator body turns the gas/droplet flow through 90 degrees, from a horizontal path at the inlet, to a vertically downward path and directly onto the horizontal base gas blanking plate 34. At this point (32) the gases are forced to turn through 180 degrees and to flow vertically upwards into the gas discharge tube 12. The majority of water droplets will have at this point in the gas path migrated to the inside walls of the separator vessel and so drain into a collection water sump 33. Any free water droplets in the gases at this point, i.e. not adhered to the inside walls, will tend, due to their trajectory, momentum and assisted by gravity, to be collected in the water sump 33. Water and captured particulate matter is drawn out of the sump 33 through pipe 14. The treated vehicle exhaust gases are either vented to atmosphere or directed to the optional downstream MAC (refer Figures 1, 5 and 8) through tube 12.

With the optional degassing stage a second water recirculation circuit is introduced, as shown in Figure 1, into which chemical reagents may be added. This closed loop circuit comprises a water/chemical reagent/ salts storage tank 100, liquid circulation pump 110, and liquid circulation pipes 101, 102 & 103. The liquid circuit loop is closed by the liquid passages within the MAC 90. The storage tank 100 is equipped with suitable connections for ease of filling, draining and cleaning.

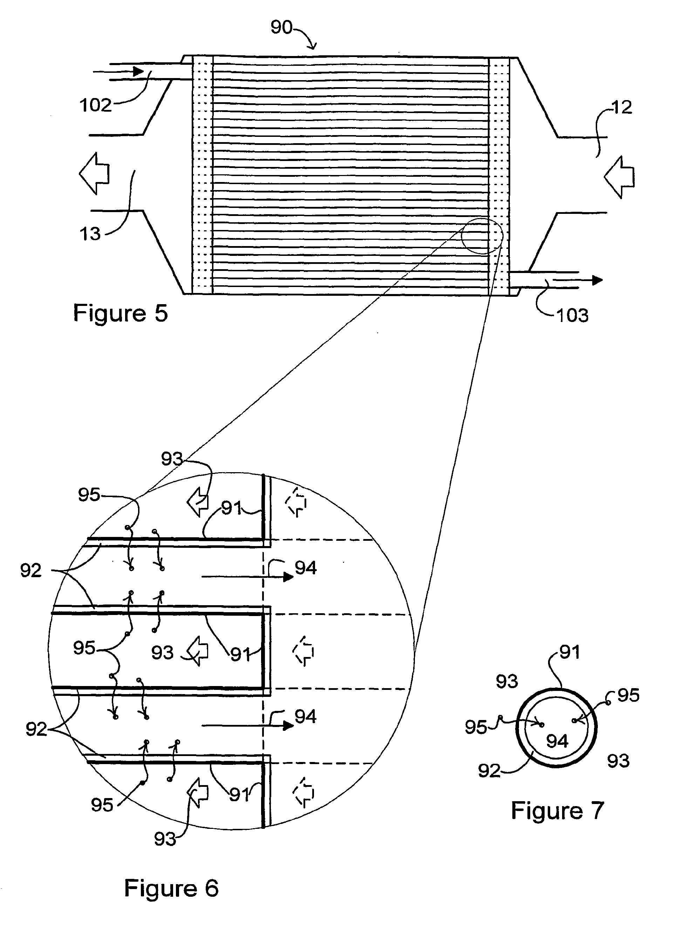

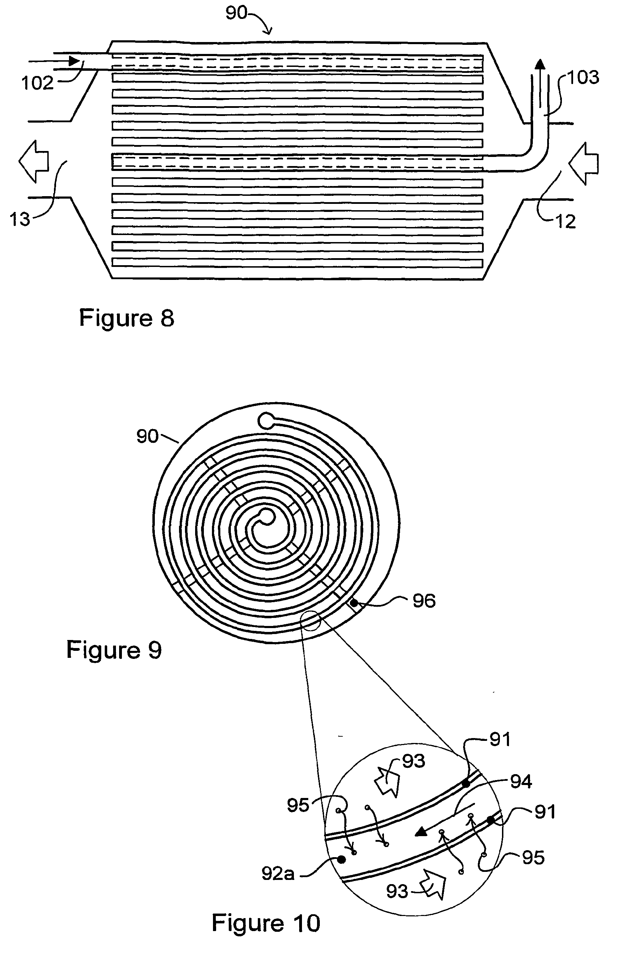

The MAC 90 shown in Figures 5 and 8 is a cylindrical unit in which vehicle exhaust gas and liquid recirculation circuits are arranged to be counter current and/or cross flow. Exhaust gases, having been pretreated i.e. particulate content substantially reduced and cooled substantially, enter the device through tube 12. The degassed exhaust gases are finally discharged through tube 13. Liquid is circulated through the device from inlet pipe 102 to outlet pipe 103. The gas and liquid streams are directed through numerous individual parallel paths separated by polymeric membranes. Figure 5 shows these parallel paths of alternating gas 93 and liquid 94 streams arranged in counter current flow. Figure 8 shows these parallel paths of alternating gas 93 and liquid 94 streams arranged in a combination of counter current and cross flow. The polymeric membrane 91 structure gives high permeability to CO₂ molecules 95 and other target gas molecules whilst essentially maintaining separation between the bulk vehicle exhaust gas and liquid streams. Rigid permeable supports or frames 92 (refer Figures 6 and 7) such as ceramic or metal meshes, or semi rigid permeable supports 92a (refer Figure 10) such as open-cell plastic foams, maintain the shape of the gas and liquid paths. These rigid or semi rigid supports 92 and 92a also serve as support and mounting for the polymeric membrane 91. Additional spacing pieces 96 are used (refer Figure 9) with semi-rigid supports 92a (refer Figure 10).

The water pumps 40, 70 and 110 are electrically driven and powered by the vehicle electric power if mounted on a car, van, truck, train or ship.

## Claims

1. Apparatus for injecting liquid into a pressurized gas stream containing suspended solids in the form of fine particles which apparatus comprises a droplet generator (20) including a gas-conveying pressure duct (10) and one or more liquid-introducing tubes (19) which lead into the said duct and terminate in one or more spray nozzles (24), **characterised in that** the duct (10) includes an atomising chamber (21/22/23) in which the sprayed liquid is sheared into a mist of very fine liquid droplets having a diameter in the range 10 to 100 µm which collide with and capture the fine particulate solids and **in that** downstream of the atomising chamber (21/22/23) there is provided a droplet separator (30) in the form of a large diameter duct in which the through gas velocity drops to below the level sufficient to keep the liquid droplets and their captured particulate solids in suspension and thereby separates the stream into a liquid/particulate mixture and a gas stream with a reduced concentration of particulates.

2. Apparatus as claimed in claim 1, in which the liquid spray is directed co-currently into the gas stream.

3. Apparatus as claimed in claim 1 or claim 2, in which the sheared mist droplets have a diameter in the range 10 to 50 µm.

4. Apparatus as claimed in any preceding claim, in which the sprayed liquid is one or more of tap water, rainwater, river water, seawater or domestic or industrial wastewater.

5. Apparatus as claimed in any preceding claim, in which the cross-sectional shape of the atomising chamber (21/22/23) at the liquid injection point (24) is circular, ellipsoidal, square or rectangular.

6. Apparatus as claimed in any preceding claim, in which the duct (10) incorporating the atomising chamber (21/22/23) is straight, curved, rounded, bent or tapered, or in a full or partial *vena contracta* (reducing and then opening).

7. Apparatus as claimed in claim 6, in which the duct (10) incorporating the atomising chamber includes a venturi section (22/23/24).

8. Apparatus as claimed in any preceding claim, in which the mouth (32) of the outlet duct (12) of the droplet separator (30) faces in the same direction as gas flow from the atomising chamber (22/23/24) such that gas exiting from the separator (30) flows in the opposite direction from gas leaving the atomising chamber (22/23/24).

9. Apparatus as claimed in any preceding claim, in which guide vanes (31) are fitted to the inside of the separator inlet section.

10. Apparatus as claimed in any preceding claim, in which the vanes (31) are mounted radially and set at an angle to the axis of the inlet duct (11) to induce axial swirling motion to the gas and water droplets on entry to the separator (30).

11. Apparatus as claimed in any preceding claim, in which the droplet separator (30) includes an inlet duct (11) having a circular, ellipsoidal, square or rectangular cross-section.

12. Apparatus as claimed in claim 11, in which the separator inlet duct (11) is straight, curved or rounded.

13. Apparatus as claimed in claim 11 or claim 12, in which the separator duct includes a sump (34) to collect the liquid/particulate mixture (33).

14. Apparatus as claimed in any preceding claim, in which the droplet generator (20) and droplet separator (30) are shaped to avoid fouling or plugging by deposited particulates.

15. Apparatus as claimed in any preceding claim, in which the droplet generator (20) is integral with the droplet separator (30).

16. Apparatus as claimed in any preceding claim, which further includes a recirculation system with one or more pumps to recirculate liquid from the sump (34) to the spray nozzle (24).

17. Apparatus as claimed in claim 16, in which the recirculation system includes one or more liquid storage tanks (60).

18. Apparatus as claimed in claim 16 or claim 17, in which the recirculation system includes one or one or more filters (50) to remove particulates from the liquid before it is reused.

19. Apparatus as claimed in claim 18, in which the filters (50) are in readily replaceable modules.

20. Apparatus as claimed in any preceding claim, which further includes downstream of the droplet separator (20) a degassing unit (90) for absorbing residual gases and vapours.

21. Apparatus as claimed in claim 20, in which the degassing unit (90) is integral with the droplet generator (20) and droplet separator (30).

22. Apparatus as claimed in claim 20 or claim 21, in which the degassing unit (90) is disposed in an easily-removable and easily cleanable module.

23. Apparatus as claimed in any of claims 20 to 22, in which the degassing unit (90) is a polymer or membrane absorber contactor (MAC).

24. A motor vehicle including liquid injection apparatus as claimed in any preceding claim.

25. A process for injecting liquid into a pressurized gas stream containing suspended solids in the form of fine particles in which the liquid is sprayed into and mixed with the gas stream, **characterised in that** the liquid is introduced in a manner to be atomised into a sheared mist of very fine liquid droplets having a diameter in the range 10 to 100 µm which collide with and capture the fine particulate solids and in which the velocity of the gas stream containing the so-formed liquid/particulate mixture is then reduced to below the level sufficient to keep the liquid droplets and their captured particulate solids in suspension and thereby separate the stream into a liquid/particulate mixture and a gas stream with a reduced concentration of particulates.

26. A process as claimed in claim 25, in which at the point of liquid injection the gas stream containing suspended solids is at a pressure in the range 0.2 to 15 kPa.

27. A process as claimed in claim 25 or claim 26, in which the gas pressure drop through the stages of liquid atomising and separation of liquid/particulates is below 4 kPa.

28. A process as claimed in any of claims 25 to 27, in which the liquid spray is directed co-currently into the gas stream.

29. A process as claimed in any of claims 25 to 28, in which the mist droplets have a diameter in the range 10 to 50 µm.

30. A process as claimed in any of claims 25 to 29, in which the gas velocity through the atomising chamber is in the range 5 to 200 m/s

31. A process as claimed in any of claims 25 to 30, in which the liquid to gas ratio is in the range 0.01 - 0.15 litres/m³ (water to gas volume ratio).

32. A process as claimed in any of claims 25 to 31, in which the sprayed liquid is one or more of tap water, rainwater, river water, seawater or domestic or industrial wastewater.

33. A process as claimed in claim 32, in which the sprayed liquid includes one or more mild, non-toxic aqueous chemical buffers, soaps or detergents and/or catalysts or enzymes, for the purpose of accelerating absorption of gases such as CO₂, NOₓ, SO₂ or organic vapours.

34. A process as claimed in claim 33, in which the sprayed liquid has a pH in the range 7 to 11.

35. A process as claimed in any of claims 25 to 34, in which the liquid droplets and captured solids are separated from the gas stream by reversing the direction of the gas stream.

36. A process as claimed in any of claims 25 to 35, in which the pressure losses through the droplet generator and droplet separator are controlled by a combination of liquid to gas ratio and the gas velocity at the point of liquid injection.

37. A process as claimed in any of claims 25 to 36, in which the separated liquid is recirculated.

38. A process as claimed in any of claims 25 to 37, in which CO₂ and soluble hydrocarbons are separated from the gas stream after the particulates have been separated from it.

39. A process as claimed in any of claims 25 to 38, in which residual gases and vapours in the separated gas stream are absorbed in a degassing stage.

40. A process as claimed in claim 39, in which the residual gases and vapours are separated from the gas steam in a membrane absorber contactor (MAC) degassing unit.

41. A process as claimed in claim 40, in which washing with water periodically cleans the MAC unit.

42. A process as claimed in claim 41, in which the washing water includes one or more added chemical reagents selected from sodium hydroxide (NaOH), methanolamine (MEA), diethanolamine (DEA) or other alkalis, amines, buffers, soaps or detergents, catalysts or enzymes to accelerate reaction with and elimination of residual gases and organic vapours.

43. A process as claimed in claim 42, in which the concentration of the chemical reagents is above a 2M strength unless the solution contains an accelerating catalyst or enzyme.

## Patentansprüche

1. Vorrichtung zum Injizieren von Flüssigkeit in einen unter Druck gesetzten Gasstrom, der Schwebstoffe in der Form feiner Partikel enthält, wobei die Vorrichtung umfasst: einen Tröpfchengenerator (20) einschließlich einer gasführenden Druckleitung (10) und eines oder mehrerer flüssigkeitseinführender Rohre (19), welche in die Leitung führen und in einer oder mehreren Sprühdüsen (24) enden, **dadurch gekennzeichnet, dass** die Leitung (10) eine Zerstäubungskammer (21/22/23) umfasst, in welcher die gesprühte Flüssigkeit in einen Nebel aus sehr feinen Flüssigkeitströpfchen mit einem Durchmesser im Bereich von 10 bis 100 µm geschert wird, welche mit den feinen Feststoffpartikeln kollidieren und sie einfangen, und **dadurch**, dass nachgelagert zu der Zerstäubungskammer (21/22/23) ein Tröpfchenabscheider (30) in der Form einer Leitung großen Durchmessers bereitgestellt wird, in welchem die Durchgangsgasgeschwindigkeit unter ein Niveau fällt, das ausreicht, um die Flüssigkeitströpfchen und ihre eingefangenen Feststoffpartikel in Suspension zu halten, und **dadurch** den Strom in einen Flüssigkeits-/Partikelmischungs- und einen Gasstrom mit einer reduzierten Partikelkonzentration trennt.

2. Vorrichtung nach Anspruch 1, in welcher der Flüssigkeitsstrahl mit-strömend in den Gasstrom gerichtet wird.

3. Vorrichtung nach Anspruch 1 oder Anspruch 2, in welcher die gescherten Nebeltröpfchen einen Durchmesser in dem Bereich 10 bis 50 µm aufweisen.

4. Vorrichtung nach einem der vorstehenden Ansprüche, in welcher die gesprühte Flüssigkeit eine oder mehr von Leitungswasser, Regenwasser, Flußwasser, Meerwasser oder Haushalts- oder industriellem Abwasser ist.

5. Vorrichtung nach einem der vorstehenden Ansprüche, in welcher die Querschnittsform der Zerstäubungskammer (21/22/23) am Flüssigkeitsinjektionspunkt (24) kreisförmig, elipsoid, quadratisch oder rechteckig ist.

6. Vorrichtung nach einem der vorstehenden Ansprüche, in welcher die Leitung (10), die die Zerstäubungskammer (21/22/23) enthält, gerade, gekrümmt, gerundet, gebogen oder verjüngt ist oder in einer vollständigen oder teilweisen Einschnürungsstelle (reduzierend und dann öffnend).

7. Vorrichtung nach Anspruch 6, in welcher die Leitung (10), die die Zerstäubungskammer enthält, einen Venturi-Bereich (22/23/24) enthält.

8. Vorrichtung nach einem der vorstehenden Ansprüche, in welcher die Öffnung (32) der Auslassleitung (12) des Tröpfchenabscheiders (30) in die gleiche Richtung gerichtet ist wie ein Gasfluss von der Zerstäubungskammer (22/23/24), so dass Gas, das von dem Abscheider (30) austritt, in die entgegengesetzte Richtung von Gas fließt, das die Zerstäubungskammer (22/23/24) verlässt.

9. Vorrichtung nach einem der vorstehenden Ansprüche, in welcher Lenkflächen (31) in das Innere des Abscheidereinlassbereichs eingepasst sind.

10. Vorrichtung nach einem der vorstehenden Ansprüche, in welcher die Flächen (31) radial angebracht sind und in einem Winkel zur Achse der Einlassleitung (11) angesetzt sind, um eine axiale Verwirbelungsbewegung in dem Gas und den Wassertröpfchen beim Eintritt in den Abscheider (30) einzuleiten.

11. Vorrichtung nach einem der vorstehenden Ansprüche, in welcher der Tröpfchenabscheider (30) eine Einlassleitung (11) umfasst, die einen kreisförmigen, elipsoiden, quadratischen oder rechteckigen Querschnitt aufweist.

12. Vorrichtung nach Anspruch 11, in welcher die Abscheidereinlassleitung (11) gerade, gekrümmt oder gerundet ist.

13. Vorrichtung nach Anspruch 11 oder Anspruch 12, in welcher die Abscheiderleitung eine Wanne (34) umfasst, um die Flüssigkeits-/Partikelmischung (33) zu sammeln.

14. Vorrichtung nach einem der vorstehenden Ansprüche, in welcher der Tröpfchengenerator (20) und der Tröpfchenabscheider (30) so geformt sind, dass Verschmutzung oder Verstopfen durch abgesetzte Partikel vermieden werden.

15. Vorrichtung nach einem der vorstehenden Ansprüche, in welcher der Tröpfchengenerator (20) in den Tröpfchenabscheider (30) eingebaut ist.

16. Vorrichtung nach einem der vorstehenden Ansprüche, welche des weiteren ein Umwälzsystem mit einer oder mehreren Pumpen umfasst, um Flüssigkeit von der Wanne (34) zu der Sprühdüse (24) umzuwälzen.

17. Vorrichtung nach Anspruch 16, in welcher das Umwälzsystem einen oder mehrere Flüssigkeitsstaubehälter (60) umfasst.

18. Vorrichtung nach Anspruch 16 oder Anspruch 17, in welcher das Umwälzsystem einen oder mehrere Filter (50) umfasst, um Partikel aus der Flüssigkeit zu entfernen, bevor sie wiederverwendet wird.

19. Vorrichtung nach Anspruch 18, in welcher die Filter (50) in leicht ersetzbaren Modulen sind.

20. Vorrichtung nach einem der vorstehenden Ansprüche, welche des weiteren nachgelagert zu dem Tröpfchenabscheider (20) eine Entgasungseinheit (90) umfasst, um Restgase und Dämpfe zu absorbieren.

21. Vorrichtung nach Anspruch 20, in welcher die Entgasungseinheit (90) in den Tröpfchengenerator (20) und den Tröpfchenabscheider (30) eingebaut ist.

22. Vorrichtung nach Anspruch 20 oder Anspruch 21, in welcher die Entgasungseinheit (90) in einem leicht entfernbaren und leicht zu reinigenden Modul angeordnet ist.

23. Vorrichtung nach einem der Ansprüche 20 bis 22, in welcher die Entgasungseinheit (90) ein Polymer- oder Membranabsorberkontaktor (membran absorber contactor - MAC) ist.

24. Ein Motorfahrzeug, umfassend eine Flüssigkeitseinspritzvorrichtung wie in einem der vorstehenden Ansprüche beansprucht.

25. Verfahren zum Injizieren von Flüssigkeit in einen unter Druck gesetzten Gasstrom, der Schwebstoffe in der Form feiner Partikel enthält, in welchem die Flüssigkeit in den Gasstrom gesprüht wird und damit vermischt wird, **dadurch gekennzeichnet, dass** die Flüssigkeit in einer Weise eingeführt wird, um in einen gescherten Nebel sehr feiner Flüssigkeitströpfchen mit einem Durchmesser in dem Bereich von 10 bis 100µm zerstäubt zu werden, welche mit den feinen Feststoffpartikeln kollidieren und sie einfangen, und in welchem die Geschwindigkeit des Gasstroms, der die so gebildete Flüssigkeits-/Partikelmischung enthält, dann bis unter das Niveau reduziert wird, das ausreicht, um die Flüssigkeitströpfchen und ihre eingefangenen Feststoffpartikel in Suspension zu halten, und dadurch den Strom in Flüssigkeits-/Partikelmischung und ein Gasstrom mit reduzierter Partikelkonzentration trennt.

26. Verfahren nach Anspruch 25, in welchem der Gasstrom, der Schwebstoffe enthält, am Punkt der Flüssigkeitsinjektion einen Druck in dem Bereich von 0,2 bis 15 kPa aufweist.

27. Verfahren nach Anspruch 25 oder Anspruch 26, in welchem der Gasdruckabfall durch die Stufen von Flüssigkeitszerstäubung und Abscheidung von Flüssigkeit/Partikeln unter 4 kPa liegt.

28. Verfahren nach einem der Ansprüche 25 bis 27, in welchem der Flüssigkeitsstrahl mit-strömend in den Gasstrom gerichtet ist.

29. Verfahren nach einem der Ansprüche 25 bis 28, in welchem die Nebeltröpfchen einen Durchmesser in dem Bereich von 10 bis 50 µm aufweisen.

30. Verfahren nach einem der Ansprüche 25 bis 29, in welchem die Gasgeschwindigkeit durch die Zerstäubungskammer in dem Bereich von 5 bis 200 m/s ist.

31. Verfahren nach einem der Ansprüche 25 bis 30, in welchem das Flüssigkeits-zu-Gas-Verhältnis in dem Bereich von 0,01 bis 0,15 Liter/m³ liegt (Wasser-zu-Gas-Volumen-Verhältnis).

32. Verfahren nach einem der Ansprüche 25 bis 31, in welchem die gesprühte Flüssigkeit eine oder mehr von Leitungswasser, Regenwasser, Flußwasser, Meerwasser oder Haushalts- oder industriellem Abwasser ist.

33. Verfahren nach Anspruch 32, in welchem die gesprühte Flüssigkeit einen oder mehrere weiche, nicht giftige wässrige chemische Puffer, Seifen oder Reinigungsmittel und/oder Katalysatoren oder Enzyme einschließt, zum Zweck der Beschleunigung von Absorption von Gasen sowie CO₂, NOₓ, SO₂ oder organischer Dämpfe.

34. Verfahren nach Anspruch 33, in welchem die gesprühte Flüssigkeit einen pH-Wert in dem Bereich von 7 bis 11 aufweist.

35. Verfahren nach einem der Ansprüche 25 bis 34, in welchem die Flüssigkeitströpfchen und eingefangenen Feststoffe von dem Gasstrom durch Umdrehen der Richtung des Gasstroms getrennt werden.

36. Verfahren nach einem der Ansprüche 25 bis 35, in welchem die Druckverluste durch den Tröpfchengenerator und Tröpchenabscheider durch eine Kombination von Flüssigkeit-zu-Gas-Verhältnis und der Gasgeschwindigkeit am Punkt der Flüssigkeitsinjektion gesteuert werden.

37. Verfahren nach einem der Ansprüche 25 bis 36, in welchem die abgeschiedene Flüssigkeit umgewälzt wird.

38. Verfahren nach einem der Ansprüche 25 bis 37, in welchem CO₂ und lösbare Kohlenwasserstoffe von dem Gasstrom abgeschieden werden, nachdem die Partikel davon abgeschieden wurden.

39. Verfahren nach einem der Ansprüche 25 bis 38, in welchem Restgase und Dämpfe in dem abgeschiedenen Gasstrom in einer Entgasungsstufe absorbiert werden.

40. Verfahren nach Anspruch 39, in welchem die Restgase und Dämpfe von dem Gasstrom in einer Membranabsorberkontaktor (MAC)-Entgasungseinheit abgeschieden werden.

41. Verfahren nach Anspruch 40, in welchem Waschen mit Wasser die MAC-Einheit regelmäßig reinigt.

42. Verfahren nach Anspruch 41, in welchem das Waschwasser eine oder mehrere zugesetzte chemische Reagenzien umfasst, die aus Natriumhydroxid (NaOH), Methanolamin (MEA), Diethanolamin (DEA) oder andere Alkalien, Amine, Puffer, Seifen oder Detergenzien, Katalysatoren oder Enzyme ausgewählt werden, um eine Reaktion mit und Elimination von Restgasen und organischen Dämpfen zu beschleunigen.

43. Verfahren nach Anspruch 42, in welchem die Konzentration der chemischen Reagenzien oberhalb von 2M Stärke ist, es sei denn, die Lösung enthält einen beschleunigenden Katalysator oder ein Enzym.

## Revendications

1. Dispositif pour injecter un liquide dans un flux de gaz sous pression, contenant des solides en suspension, se présentant sous la forme de fines particules, ledit dispositif comprenant un générateur de gouttelettes (20), comprenant une conduite de pression (10), transportant des gaz, et un ou plusieurs tubes d'introduction de liquide (19), menant dans ladite conduite de pression et s'achevant en une ou plusieurs buses de pulvérisation (24), **caractérisé en ce que** la conduite (10) comprend une chambre d'atomisation (21/22/23) dans laquelle le liquide pulvérisé est soumis à un processus de cisaillement pour produire un brouillard de très fines gouttelettes de liquide d'un diamètre dans la fourchette de 10 à 100 µm, entrant en collision avec, et capturant les fines particules solides, et **en ce que**, en aval de la chambre d'atomisation (21/22/23) est prévu un séparateur de gouttelettes (30), se présentant sous la forme d'une conduite de grand diamètre, dans laquelle la vitesse de gaz traversant chute à une valeur inférieure au niveau suffisant pour maintenir en suspension les gouttelettes de liquide et leurs particules solides capturées et pour, de cette manière, séparer le flux, en un mélange liquide/particules et en un flux gazeux, présentant une concentration en particules réduite.

2. Dispositif selon la revendication 1, dans lequel la pulvérisation de liquide est dirigée en co-courant dans le flux de gaz.

3. Dispositif selon la revendication 1 ou la revendication 2, dans lequel les gouttelettes de brouillard cisaillées ont un diamètre dans la fourchette de 10 à 50 µm.

4. Dispositif selon l'une quelconque des revendications précédentes, dans lequel le liquide pulvérisé est l'un ou plusieurs, parmi l'eau du robinet, l'eau de pluie, l'eau de rivière, l'eau de mer ou des eaux usées d'origine domestique ou industrielle.

5. Dispositif selon l'une quelconque des revendications précédentes, dans lequel la forme de la section transversale de la chambre d'atomisation (21/22/23) au point d'injection de liquide (24) est circulaire, ellipsoïdale, carrée ou rectangulaire.

6. Dispositif selon l'une quelconque des revendications précédentes, dans lequel la conduite (10) incorporant la chambre d'atomisation (21/22/23) est rectiligne, incurvée, arrondie, coudée ou effilée, ou formant une *vena contracta* (réduction suivie d'une ouverture) pleine ou partielle.

7. Dispositif selon la revendication 6, dans lequel la conduite (10) incorporant la chambre d'atomisation comprend une section de venturi (22/23/24).

8. Dispositif selon l'une quelconque des revendications précédentes, dans lequel l'embouchure (32) de la conduite de sortie (12) du séparateur de gouttelettes (30) est tournée dans la même direction que le flux de gaz provenant de la chambre d'atomisation (22/23/24), de manière que le gaz, sortant du séparateur (30), s'écoule dans le sens opposé à celui du gaz quittant la chambre d'atomisation (22/23/24).

9. Dispositif selon l'une quelconque des revendications précédentes, dans lequel des aubes de guidage (31) sont montées à l'intérieur de la section d'entrée de séparateur.

10. Dispositif selon l'une quelconque des revendications précédentes, dans lequel les aubes (31) sont montées radialement et calées selon un certain angle par rapport à l'axe de la conduite d'entrée (11), afin d'induire un mouvement de rotation axiale dans le gaz et les gouttelettes d'eau, à l'entrée au séparateur (30).

11. Dispositif selon l'une quelconque des revendications précédentes, dans lequel le séparateur de gouttelettes (30) comprend une conduite d'entrée (11), ayant une section transversale circulaire, ellipsoïdale, carrée ou rectangulaire.

12. Dispositif selon la revendication 11, dans lequel la conduite d'entrée (11) du séparateur est rectiligne, incurvée, ou arrondie.

13. Dispositif selon la revendication 11 ou la revendication 12, dans lequel la conduite de séparateur comprend un bassin (34), pour collecter le mélange liquide/particules (33).

14. Dispositif selon l'une quelconque des revendications précédentes, dans lequel le générateur de gouttelettes (20) et le séparateur de gouttelettes (30) sont conformés pour éviter l'encrassement ou le bouchage par dépôt de particules.

15. Dispositif selon l'une quelconque des revendications précédentes, dans lequel le générateur de gouttelettes (20) est réalisé d'une seule pièce avec le séparateur de gouttelettes (30).

16. Dispositif selon l'une quelconque des revendications précédentes, comprenant en outre un système de recirculation équipé d'une ou plusieurs pompe(s), afin de faire recirculer le liquide provenant du bassin (34) pour l'amener à la buse de pulvérisation (24).

17. Dispositif selon la revendication 16, dans lequel le système de recirculation comprend un ou plusieurs réservoir(s) de stockage de liquide (60).

18. Dispositif selon la revendication 16 ou la revendication 17, dans lequel le système de recirculation comprend un ou plusieurs filtre(s) (50), afin de débarrasser le liquide des particules, avant qu'il soit réutilisé.

19. Dispositif selon la revendication 18, dans lequel les filtres (50) sont agencés en des modules aisément remplaçables.

20. Dispositif selon l'une quelconque des revendications précédentes, comprenant en outre, en aval du séparateur de gouttelettes (20), une unité de dégazage (90), pour absorber les gaz et vapeurs résiduel(le)s.

21. Dispositif selon la revendication 20, dans lequel l'unité de dégazage (90) est réalisée d'une seule pièce avec le générateur de gouttelettes (20) et le séparateur de gouttelettes (30).

22. Dispositif selon la revendication 20 ou la revendication 21, dans lequel l'unité de dégazage (90) est agencée en un module aisément remplaçable et aisément nettoyable.

23. Dispositif selon l'une quelconque des revendications 20 à 22, dans lequel l'unité de dégazage (90) est un contacteur absorbeur à membrane (MAC), ou en polymère.

24. Véhicule automobile, comprenant un dispositif d'injection de liquide tel que revendiqué à l'une quelconque des revendications précédentes.

25. Procédé d'injection de liquide dans un flux de gaz sous pression, contenant des solides en suspension se présentant sous la forme de fines particules, dans lequel le liquide est pulvérisé dans et mélangé au flux gazeux, **caractérisé en ce que** le liquide est introduit de manière à être atomisé en un brouillard cisaillé de très fines gouttelettes de liquide d'un diamètre dans la fourchette de 10 à 100 µm, entrant en collision avec, et capturant les fines particules solides, et dans lequel la vitesse du flux gazeux contenant le mélange liquide/particules ainsi formé est ensuite réduite à une valeur inférieure au niveau suffisant pour maintenir en suspension les gouttelettes de liquide et leurs particules solides capturées et pour, de cette manière, séparer le flux, en un mélange liquide/particules et en un flux gazeux, présentant une concentration en particules réduite.

26. Procédé selon la revendication 25, dans lequel le point d'injection de liquide dans le flux gazeux contenant des solides en suspension est situé à une pression dans la fourchette de 0,2 à 15 kPa.

27. Procédé selon la revendication 25 ou la revendication 26, dans lequel la chute de pression du gaz, au passage des étapes d'atomisation de liquide et de séparation entre liquide/particules est inférieure à 4 kPa.

28. Procédé selon l'une quelconque des revendications 25 à 27, dans lequel la pulvérisation de liquide est dirigée en co-courant dans le flux de gaz.

29. Procédé selon l'une quelconque des revendications 25 à 28, dans lequel les gouttelettes de brouillard cisaillées ont un diamètre dans la fourchette de 10 à 50 µm.

30. Procédé selon l'une quelconque des revendications 25 à 29, dans lequel la vitesse du gaz traversant la chambre d'atomisation est dans la fourchette de 5 à 200 m/s.

31. Procédé selon l'une quelconque des revendications 25 à 30, dans lequel le rapport liquide/gaz est dans la fourchette de 0,01 à 0,15 litre/m³ (rapport volumique entre eau et gaz).

32. Procédé selon l'une quelconque des revendications 25 à 31, dans lequel le liquide pulvérisé est l'un ou plusieurs, parmi l'eau du robinet, l'eau de pluie, l'eau de rivière, l'eau de mer ou des eaux usées d'origine domestique ou industrielle.

33. Procédé selon la revendication 32, dans lequel le liquide pulvérisé comprend un ou plusieurs tampons chimiques, savons ou détergents et/ou catalyseurs ou enzymes, aqueux, non toxiques, doux, ayant comme but d'accélérer l'absorption de gaz, tels que CO₂, NOₓ, SO₂ ou des vapeurs organiques.

34. Procédé selon la revendication 33, dans lequel le liquide pulvérisé présente un pH dans la fourchette de 7 à 11.

35. Procédé selon l'une quelconque des revendications 25 à 34, dans lequel les gouttelettes de liquide et les solides capturés sont séparés du flux gazeux, par inversion du sens d'écoulement du gaz.

36. Procédé selon l'une quelconque des revendications 25 à 35, dans lequel les pertes de pression au passage du générateur de gouttelettes et du séparateur de gouttelettes sont régulées par une combinaison du rapport liquide/gaz et de la vitesse de gaz au point d'injection du liquide.

37. Procédé selon l'une quelconque des revendications 25 à 36, dans lequel le liquide séparé est remis en circulation.

38. Procédé selon l'une quelconque des revendications 25 à 37, dans lequel le CO₂ et les hydrocarbures solubles sont séparés du flux gazeux, après en avoir séparé les particules.

39. Procédé selon l'une quelconque des revendications 25 à 38, dans lequel des gaz et des vapeurs résiduel(le)s présents dans le flux gazeux soumis à séparation sont absorbés dans un étage de dégazage.

40. Procédé selon la revendication 39, dans lequel les gaz et des vapeurs résiduel(le)s sont séparés du flux gazeux dans une unité de dégazage à contacteur absorbeur à membrane (MAC).

41. Procédé selon la revendication 40, dans lequel un lavage à l'eau est effectué périodiquement pour nettoyer l'unité MAC.

42. Procédé selon la revendication 41, dans lequel l'eau de lavage comprend un ou plusieurs réactifs chimiques ajoutés, sélectionnés parmi l'hydroxyde de sodium (NaOH), la méthanolamine (MEA), la diéthanolamine (DEA) ou d'autres alcalis, amines, tampons, savons ou détergents, catalyseurs ou enzymes, pour accélérer la réaction avec, et l'élimination de gaz résiduels et de vapeurs organiques.

43. Procédé selon la revendication 42, dans lequel la concentration des réactifs chimiques est supérieure à 2M, sauf si la solution contient un catalyseurs accélérateur ou une enzyme accélératrice.
